(19) Europäisches Patentamt
European Patent Office
Office européen des brevets

(11) Veröffentlichungsnummer: **0 473 003 A2**

(12) **EUROPÄISCHE PATENTANMELDUNG**

(21) Anmeldenummer: **91113608.3**

(51) Int. Cl.$^5$: **A01N 25/14**, B01J 2/00

(22) Anmeldetag: **14.08.91**

(30) Priorität: **24.08.90 DE 4026704**
**22.06.91 DE 4120694**

(43) Veröffentlichungstag der Anmeldung:
**04.03.92 Patentblatt 92/10**

(84) Benannte Vertragsstaaten:
**BE CH DE DK ES FR GB IT LI NL**

(71) Anmelder: **BAYER AG**

**W-5090 Leverkusen 1 Bayerwerk(DE)**

(72) Erfinder: **Feyen, Peter, Dr.**
**Mozartstrasse 1**
**W-4020 Mettmann(DE)**
Erfinder: **Priesnitz, Uwe, Dr.**
**Severinstrasse 58**
**W-5650 Solingen(DE)**
Erfinder: **Wiescholle k, Raphael, Dr.**
**Wiesdorfer Platz 10**
**W-5090 Leverkusen(DE)**
Erfinder: **Thielert, Wolfgang, Dr.**
**Buschweg 69**
**W-5068 Odenthal(DE)**
Erfinder: **Dutzmann, Stefan, Dr.**
**Kosenberg 10**
**W-4010 Hilden(DE)**
Erfinder: **Feucht, Dieter, Dr.**
**Ackerweg 9**
**W-4019 Monheim(DE)**
Erfinder: **Wachendorff-Neumann, Ulrike, Dr.**
**Kriescher Strasse 81**
**W-4019 Monheim(DE)**

(54) **Feststoff-Formulierungen.**

(57) Neue Feststoff-Formulierungen aus

A) mindestens einem agrochemischen Wirkstoff,
B) mindestens einem Additiv aus den in der Beschreibung genannten Gruppen,
C) mindestens einem Dispergiermittel,
D) mindestens einem Trägerstoff sowie
E) gegebenenfalls weiteren Wirkstoffen und/oder Zusatzstoffen,

Verfahren zur Herstellung der neuen Feststoff-Formulierungen und deren Verwendung als Pflanzenbehandlungsmittel.

Eine neue Vorrichtung zur Herstellung neuer Granulate.

EP 0 473 003 A2

Die vorliegende Erfindung betrifft neue Feststoff-Formulierungen auf Basis von agrochemischen Wirkstoffen, Verfahren zur Herstellung der Feststoff-Formulierungen und deren Verwendung als Pflanzenbehandlungsmittel. Die Erfindung betrifft außerdem eine neue Vorrichtung zur Herstellung neuer Granulate.

Es ist bereits bekannt, daß agrochemische Wirkstoffe in Form von Feststoff-Formulierungen, wie Granulaten oder Pulvern, eingesetzt werden können. Die Wirksamkeit dieser Zubereitungen ist jedoch nicht immer vollkommen befriedigend. So ist sie z.B. in manchen Fällen schwächer als diejenige von entsprechenden Emulsionskonzentraten.

Speziell ist schon bekannt, daß 1-(4-Chlorphenyl)-4,4-dimethyl-3-(1,2,4-triazol-1-yl-methyl)-pentan-3-ol fungizide Eigenschaften besitzt und in übliche Formulierungen überführt werden kann (vgl. EP-OS 0 040 345). So lassen sich auch Feststoff-Formulierungen, wie Granulate oder Pulver, herstellen, die den genannten Wirkstoff enthalten. Die Wirksamkeit und die Verträglichkeit dieser herkömmlichen Feststoff-Formulierungen ist aber nicht immer ganz befriedigend.

Weiterhin wurde auch die Herstellung von Granulaten, die agrochemische Wirkstoffe enthalten, nach dem Wirbelschicht-Agglomerisations-Verfahren beschrieben (vgl. EP-OS 0 163 836). So sind nach dieser Methode auch Granulate zugänglich, in denen 1-(4-Chlorphenyl)-4,4-dimethyl-3-(1,2,4-triazol-1-yl-methyl)-pentan-3-ol als aktive Komponente vorhanden ist. Auch die Wirksamkeit dieser Formulierungen läßt jedoch in manchen Fällen zu wünschen übrig.

Es wurden nun neue Feststoff-Formulierungen aus

A) mindestens einem agrochemischen Wirkstoff,

B) mindestens einem Additiv aus den Gruppen

- Polyethoxy-iso-tridecylalkohol mit durchschnittlich 6 Ethylenoxid-Einheiten pro Molekül, oder
- Alkylaryl-polyethoxyethanol-phosphorsäureester, oder
- der N-Alkyl-lactame der Formel

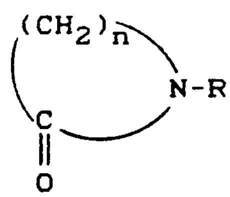

(II)

in welcher

R für Alkyl mit 6 bis 18 Kohlenstoffatomen steht und

n für die Zahlen 3, 4 oder 5 steht,

- der Alkylcarbonsäure-dimethylamide der Formel

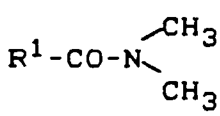

(III)

in welcher

$R^1$ für Alkyl mit 5 bis 11 Kohlenstoffatomen steht,

C) mindestens einem Dispergiermittel,

D) mindestens einem Trägerstoff sowie

E) gegebenenfalls weiteren Wirkstoffen und/oder Zusatzstoffen,

gefunden.

Weiterhin wurde gefunden, daß sich die neuen Feststoff-Formulierungen herstellen lassen, indem man entweder

a)

- eine Lösung aus mindestens einem agrochemischen Wirkstoff sowie gegebenenfalls Zusatzstoffen in mindestens einem Additiv aus den unter (B) genannten Gruppen und
- eine Mischung aus mindestens einem Dispergiermittel und mindestens einem Trägerstoff sowie gegebenenfalls weiteren agrochemischen Wirkstoffen und/oder Zusatzstoffen getrennt in einen Wirbelschichtgranulator einbringt, bis zum Entstehen eines körnigen Produktes granuliert und nach gegebenenfalls vorherigem Besprühen mit Wasser sowie anschließendem Trocknen das Granulat aus dem Wirbelschichtgranulator ausschleust, oder

b)

- eine Mischung aus mindestens einem Dispergiermittel und mindestens einem Trägerstoff sowie gegebenenfalls agrochemischen Wirkstoffen und/oder Zusatzstoffen in einem Mischer vorlegt,
- eine Lösung aus mindestens einem agrochemischen Wirkstoff sowie gegebenenfalls Zusatzstoffen in mindestens einem Additiv aus den unter (B) genannten Gruppen bis zum Entstehen eines Produktes der gewünschten Korngröße einsprüht und
- die anfallende Feststoff-Formulierung nach gegebenenfalls vorherigem Besprühen mit Wasser sowie anschließendem Trocknen aus dem Mischer austrägt,

und gegebenenfalls anschließend die entstandenen Feststoff-Formulierungen mahlt.

Außerdem wurde gefunden, daß die erfindungsgemäßen Feststoff-Formulierungen sehr gut als Pflanzenbehandlungsmittel eingesetzt werden können und ausgezeichnete biologische Eigenschaften besitzen.

Schließlich wurde eine neue Vorrichtung zur Herstellung neuer Granulate gefunden. Die Vorrichtung besteht im wesentlichen aus einem Wirbelschichtgranulator,

- der eine oder mehrere Zuleitungen zum Einbringen einer festen Phase in das Wirbelbett,
- eine oder mehrere Zweistoffdüsen zum Einbringen und zum Zerstäuben einer flüssigen Phase,
- eine oder mehrere Zuleitungen zum Einbringen von Fluidisierungsgas und
- einen oder mehrere Gegenstromschwerkraft-Sichter zum Austragen von Granulat

enthält.

Es ist als äußerst überraschend zu bezeichnen, daß die erfindungsgemäßen Feststoff-Formulierungen jeweils die biologischen Eigenschaften der entsprechenden bisher bekannten Feststoff-Formulierungen übertreffen. So lassen sich z.B. die erfindungsgemäßen Feststoff-Formulierungen auf Basis von 1-(4-Chlorphenyl)-4,4-dimethyl-3-(1,2,4-triazol-1-yl-methyl)-pentan-3-ol besser zur Bekämpfung von phytopathogenen Pilzen verwenden als die aus dem Stand der Technik bekannten Feststoff-Formulierungen, die ebenfalls diesen Wirkstoff enthalten.

Als agrochemische Wirkstoffe können in den erfindungsgemäßen Feststoff-Formulierungen alle üblichen zur Pflanzenbehandlung geeigneten Substanzen enthalten sein. Dabei kommen sowohl Stoffe in Frage, die bei Raumtemperatur fest sind, als auch solche, die bei Raumtemperatur flüssig sind. Voraussetzung für den Einsatz flüssiger Komponenten ist lediglich, daß sie auf die festen Trägermaterialien gegebenenfalls unter Abpudern aufgezogen werden können. Die aktiven Komponenten können in Wasser löslich oder unlöslich sein. Sie müssen soweit stabil sein, daß sie während der Durchführung des erfindungsgemäßen Verfahrens und während der Anwendung der resultierenden Feststoff- Formulierungen keine nennenswerte Zersetzung erleiden.

Unter agrochemischen Stoffen sind im vorliegenden Fall üblicherweise im Pflanzenschutz verwendbare Wirkstoffe zu verstehen. Hierzu gehören vorzugsweise Insektizide, Akarizide, Nematizide, Fungizide, Herbizide, Wachstumsregulatoren und Düngemittel. Als Beispiele für derartige Wirkstoffe seien im einzelnen genannt:

1-(4-Chlorphenyl)-4,4-dimethyl-3-(1,2,4-triazol-1-yl-methyl)-pentan-3-ol (Tebuconazole),
1-(4-Chlorphenoxy)-3,3-dimethyl-(1,2,4-triazol-1-yl)-butan-2-ol(Triadimenol),
1-(4-Chlorphenoxy)-3,3-dimethyl-(1,2,4-triazol-1-yl)-butan-2-on(Triadimefon),
1-(4-Phenyl-phenoxy)-3,3-dimethyl-(1,2,4-triazol-1-yl)-butan-2-ol (Bitertanol),
N,N-Dimethyl-N'-phenyl-(N'-fluordichlormethylthio)-sulfamid (Dichlofluanid),
N,N-Dimethyl-(N'-fluordichlormethylthio)-N'-(4-methyl-phenyl)-sulfamid (Tolylfluanid),
N-Trichlormethylmercapto-4-cyclohexen-1,2-dicarboxamid (Captan),
N-(1,1,2,2-Tetrachlorethyl-sulfenyl)-cis-4-cyclohexen-1,2-dicarboxamid (Captafol),
N-Trichlormethylthio-phthalimid (Folpet),
N-Dodecyl-guanidin-acetat (Dodine),
Tetrachlor-isophthalo-dinitril (Chlorothalonil),
4,5,6,7-Tetrachlorphthalid,
Zink-ethylen-bis-dithiocarbamat (Zineb),
Mangan-ethylen-bis-dithiocarbamat (Maneb),
Zink-ethylen-bis-dithiocarbamat/Mangan-ethylen-bis-dithiocarbamat (Mancozeb),
Zink-propylen-1,2-bis-dithiocarbamat (Propineb),
1-[3-(4-(1,1-Dimethylethyl)-phenyl)-2-methylpropyl]-piperidin (Fenpropidin),
N-Tridecyl-2,6-dimethyl-morpholin (Tridemorph),
N-Dodecyl-2,6-dimethyl-morpholin (Aldimorph),
2-[2-(2,4-Dichlorphenyl)-2-(2-propenyloxy)-ethyl]-imidazol (Imazalil),
N-[2-(2,4,6-Trichlorphenoxy)-ethyl]-N-propyl-1H-imidazol (Prochloraz),
1,2-Dimethyl-cyclopropan-1,2-dicarbonsäure-3,5-dichlorphenylimid (Procymidone),

2-Methoxycarbamoyl-benzimidazol (Carbendazim),
1-(Butylcarbamoyl)-2-benzimidazolmethylcarbamat (Benomyl),
2,4-Dichlor-6-(2'-chlorphenyl-amino)-1,3,4-triazin (Anilazine),
Bis-(8-Guanidino-octyl)-amin-triacetat (Guazatine),
1-(4-Chlorbenzyl)-1-cyclopentyl-3-phenyl-harnstoff (Pencycuron),
6-Methyl-2-oxo-1,3-dithiolo-[4,5-b]-chinoxalin (Chinomethionat),
trans-5-(4-Chlorphenyl)-N-cyclohexyl-4-methyl-2-oxo-3-thiazolidin-carboxamid (Hexythiazox),
1-(4-Fluorphenyl)-1-(1,2,4-triazol-1-yl-methyl)-2-(2-chlorphenyl)-oxiran,
2-(2,4-Dichlorphenyl)-1-(1,2,4-triazol-1-yl)-pentan (Penconazole),
1-[2-(2,4-Dichlorphenyl)-4-propyl-1,3-dioxolan-2-yl-methyl]-1H-(1,2,4-triazol) (Propiconazole),
1-(2-[2-Chlor-4-(4-chlorphenoxy)-phenyl]-4-methyl-(1,3-dioxolan-2-yl)-methyl]-1H-(1,2,4-triazol),
1-(2,4-Dichlorphenyl)-4,4-dimethyl-2-(1,2,4-triazol-1-yl)-pentan-3-ol (Diclobutrazol),
1-(2-Chlorphenyl)-2-(1-chlor-cycloprop-1-yl)-3-(1,2,4-triazol-1-yl)-propan-2-ol,
1-Cyclohexyl-4,4-dimethyl-3-hydroxy-2-(1,2,4-triazol-1-yl)-pent-1-en (Triapenthenol),
2-Isopropoxy-phenyl-N-methyl-carbamat,
4-Amino-6-(1,1-dimethyl-ethyl)-3-methylthio-1,2,4-triazin-5(4H)-on (Metribuzin),
3-Methyl-4-amino-6-phenyl-1,2,4-triazin-5(4H)-on (Metamitron),
N-Benzthiazolyl-N-methyl-N'-methylharnstoff,
3-Methoxycarbonyl-aminophenyl-N-(3'-methyl-phenyl)-carbamat,
N-(4-Trifluormethoxy-phenyl)-N'-(2-chlor-benzoyl)-harnstoff,
1-[4-(2-Chlor-1,1,2-trifluorethoxy)-phenyl]-3-(4-phenyl-1,2,5-oxadiazol-3-yl)-harnstoff,
2-Ethoxy-2,3-dihydro-3,3-dimethyl-5-benzofuranyl-methansulfonat.

Besonders bevorzugt ist das 1-(4-Chlorphenyl)-4,4-dimethyl-3-(1,2,4-triazol-1-yl-methyl)-pentan-3-ol der Formel

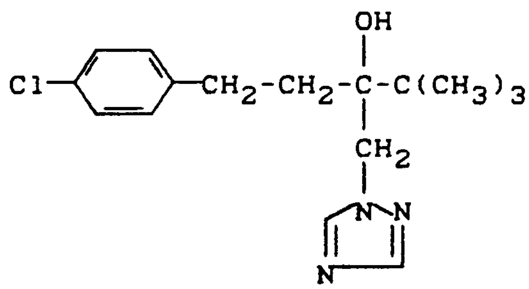

(I)

Dieser Wirkstoff und dessen Verwendung als Fungizid sind bekannt (vgl. EP-OS 0 040 345).

Der Wirkstoff der Formel (I) kann in den erfindungsgemäßen Feststoff-Formulierungen entweder als alleinige aktive Komponente oder auch im Gemisch mit weiteren agrochemischen Wirkstoffen enthalten sein.

In den erfindungsgemäßen Feststoff-Formulierungen ist als Additiv mindestens einer der unter (B) aufgeführten Stoffe enthalten. Bevorzugt in Frage kommen

- Polyethoxy-iso-tridecylalkohol mit durchschnittlich 6 Ethylenoxid-Einheiten pro Molekül,
- Alkylaryl-polyethoxyethanol-phosphorsäureester, der unter der Bezeichnung "Blendex®" im Handel ist,
- N-Alkyl-lactame der Formel (II), in denen
  R für Alkyl mit 8 bis 14 Kohlenstoffatomen steht und
  n für die Zahlen 3, 4 oder 5 steht, und
- außerdem einzelne Alkylcarbonsäuredimethylamide der Formel (III) oder Gemische davon.

Besonders bevorzugte N-Alkyl-lactame sind diejenigen Stoffe der Formel (II), in denen
R für Alkyl mit 8, 10 oder 12 Kohlenstoffatomen steht und
n für die Zahlen 3, 4 oder 5 steht.

Als Beispiele für N-Alkyl-lactame der Formel (II) seien genannt:
N-Dodecyl-caprolactam
N-Decyl-caprolactam
N-Octyl-caprolactam
N-Dodecyl-pyrrolidon
N-Decyl-pyrrolidon

N-Octyl-pyrrolidon
N-Dodecyl-valerolactam
N-Decyl-valerolactam
N-Octyl-valerolactam.

Besonders bevorzugt ist auch das unter dem Handelsnamen Hallcomid bekannte Gemisch von Alkylcarbonsäure-dimethylamiden der Formel (III), das durchschnittlich zu 5 % aus Hexancarbonsäure-dimethylamid, 50 % Octancarbonsäure-dimethylamid, 40 % Decancarbonsäure-dimethylamid und 5 % aus Dodecancarbonsäure-dimethylamid besteht.

Die in den erfindungsgemäßen Feststoff-Formulierungen vorhandenen Additive sind bekannt (vergl. J. Org. Chem. 18, 1087 (1953); Ann. Chem. 596, 203 (1955); J. Amer. Chem. Soc. 69, 715 (1947); DE-AS 1 160 268; EP-OS 0 077 078, WO 88/00 184 und Farm Chemicals Handbook 1990, C 44).

Als Dispergiermittel kommen im Falle der erfindungsgemäßen Feststoff-Formulierungen alle für derartige Zwecke üblicherweise einsetzbaren Stoffe mit entsprechenden oberflächenaktiven Eigenschaften in Betracht. Bevorzugt sind Ligninsulfonate, wie Lithium-, Natrium-, Kalium-, Magnesium-, Calcium- und Ammonium-Salze der Ligninsulfonsäure, ferner Kondensationsprodukte aus Aryl- oder Alkylaryl- sulfonsäuren und Formaldehyd, wie Kondensationsprodukte aus sulfoniertem Ditolylether und Formaldehyd, und deren Salze, außerdem Ethylenoxid-Addukte und Fettsäureester bzw. deren Salze.

Als Trägerstoffe kommen im Falle der erfindungsgemäßen Feststoff-Formulierungen alle üblicherweise in Granulaten und Pulvern verwendbaren Feststoffe mit großer Oberfläche und/oder hoher Saugfähigkeit in Frage. Bevorzugt sind natürliche Gesteinsmehle, wie Kaoline, Tonerden, Talkum, Kreide, Quarz, Attapulgit, Montmorillonit oder Diatomeenerde, und synthetische Gesteinsmehle, wie hochdisperse Kieselsäure, Aluminiumoxid und Silikate, und ferner Salze, wie Kaliumsulfat, Kaliumcarbonat und Natriumhydrogencarbonat.

Als Zusatzstoffe, die in den erfindungsgemäßen Feststoff-Formulierungen enthalten sein könen, kommen Bindemittel, Konservierungsmittel, Farbstoffe, Säuren und Granulierflüssigkeiten in Betracht.

Als Bindemittel können alle in wasserdispergierbaren Feststoff-Formulierungen üblicherweise vorhandenen Bindemittel (Kleber) enthalten sein. Vorzugsweise in Frage kommen dabei Methylcellulose, Zucker, Dextrin, Stärke, Alginate, Glykole, Polyvinylpyrrolidon, Ligninsulfonat, Gummiarabicum, Polyvinylalkohol und Polyvinylacetat.

Beispiele für Konservierungsmittel, die in den erfindungsgemäßen Feststoff-Formulierungen enthalten sein können, sind 2-Hydroxybiphenyl, Sorbinsäure, p-Hydroxybenzaldehyd, p-Hydroxybenzoesäuremethylester, Benzaldehyd, Benzoesäure und p-Hydroxybenzoesäurepropylester.

Als Farbstoffe, die als Zusatzstoffe in Betracht kommen, seien anorganische Pigmente, wie Eisenoxid, Titandioxid und Ferrocyanblau, und organische Farbstoffe, wie Alizarin-, Azo- und Metallphthalocyaninfarbstoffe genannt.

Als Säuren, die als Zusatzstoffe in Betracht kommen, sei p-Toluolsulfonsäure genannt.

Als Granulierflüssigkeiten können in den erfindungsgemäßen Feststoff-Formulierungen Wasser, organische Lösungsmittel oder Gemische aus Wasser und organischen Lösungsmitteln enthalten sein. Hierbei kommen als organische Lösungsmittel vorzugsweise Alkohole, wie Ethanol und Glycol, Halogenkohlenwasserstoffe, wie Methylenchlorid und Ether, wie Dioxan und Tetrahydrofuran in Betracht. Besonders bevorzugt ist Wasser als Granulierflüssigkeit.

In den erfindungsgemäßen Feststoff-Formulierungen können die prozentualen Anteile der enthaltenen Komponenten innerhalb größerer Bereiche variiert werden. Der Anteil an agrochemischen Wirkstoffen liegt im allgemeinen zwischen 5 und 90 Gew.-%, vorzugsweise zwischen 10 und 50 Gew.-%. Der Anteil an Additiv beträgt im allgemeinen 5 bis 75 Gew.-%, vorzugsweise 10 bis 70 Gew.-%. Der Anteil an Dispergiermittel liegt im allgemeinen zwischen 1 und 30 Gew.-%, vorzugsweise zwischen 5 und 25 Gew.-%, und der Anteil an Trägerstoff liegt im allgemeinen zwischen 10 und 50 Gew.-%, vorzugsweise zwischen 15 und 45 Gew.-%. Die Zusatzstoffe sind im allgemeinen in Anteilen zwischen 10 und 70 Gew.-%, vorzugsweise zwischen 20 und 50 Gew.-% enthalten, und der Anteil an Granulierflüssigkeit liegt im allgemeinen zwischen 0 und 3,5 Gew.-%.

Bei der Durchführung des erfindungsgemäßen Verfahrens nach den Varianten (a) oder (b) können vorzugsweise alle diejenigen Komponenten verwendet werdn, die bereits im Zusammenhang mit der Beschreibung der erfindungsgemäßen Feststoff-Formulierungen vorzugsweise genannt wurden.

Zur Durchführung des erfindungsgemäßen Verfahrens nach der Variante (a) stellt man zunächst eine Lösung aus mindestens einem agrochemischen Wirkstoff sowie gegebenenfalls Zusatzstoffen in mindestens einem Additiv her. Dazu werden die Komponenten bei Temperaturen zwischen 10 °C und 100 °C, vorzugsweise zwischen 20 °C und 90 °C miteinander verrührt, so daß eine flüssige Phase entsteht. Bei der flüssigen Phase handelt es sich demgemäß um eine Schmelze oder eine echte Lösung.

Ferner stellt man eine feste Mischung her, indem man mindestens ein Dispergiermittel sowie gegebenenfalls einen oder mehrere agrochemische Wirkstoffe und/oder Zusatzstoffe mit mindestens einem festen Trägerstoff in einem solchen Verhältnis vermengt, daß die resultierende Mischung in fester Phase vorliegt. Diese Feststoff-Mischung wird nach üblichen Verfahren homogenisiert.

Zur Durchführung des erfindungsgemäßen Verfahrens nach der Variante (a) werden die flüssige und die feste Phase getrennt voneinander in einen Wirbelschichtgranulator eingebracht. Im allgemeinen geht man dabei so vor, daß man die feste, feinpulvrige Phase durch eine oder mehrere Zuführungen in den Granulator einleitet und mit Hilfe eines Gasstromes fluidisiert. Außerdem wird die flüssige Phase durch eine oder mehrere separate Düsen in den Granulator eingesprüht. Vorzugsweise erfolgt die Zugabe der flüssigen Phase über eine oder mehrere Zweistoff-Düsen, die so konstruiert sind, daß durch eine erste Zuleitung die flüssige Phase transportiert und durch eine zweite Zuleitung ein Gasstrom (Zerstäubungsgas) eingespeist wird. Beide Ströme treffen am Düsenende so aufeinander, daß die flüssige Phase mit Hilfe des Zerstäubungsgases in Form von kleinen Tröpfchen in das Wirbelbett gesprüht wird und dort auf die Partikel der festen Phase trifft.

Gegebenenfalls kann durch Aufsprühen von Wasser eine Nachgranulierung vorgenommen werden. Zur Entfernung von Wasser und/oder anderen Lösungsmitteln kann das Granulat mit Hilfe des Fluidisiergasstromes getrocknet werden.

Die Temperaturen können bei der Durchführung des erfindungsgemäßen Verfahrens nach der Variante (a) innerhalb eines größeren Bereiches variiert werden. So arbeitet man mit einer flüssigen Phase, deren Temperatur zwischen 10 °C und 100 °C, vorzugsweise zwischen 20 °C und 90 °C, liegt. Die feste Phase wird bei Temperaturen zwischen 10 °C und 50 °C, vorzugsweise zwischen 20 °C und 40 °C, eingespeist. Die Temperatur des Fluidisierungsgasstromes liegt zwischen 20 °C und 250 °C, vorzugsweise zwischen 40 °C und 200 °C. Die Temperatur des Zerstäubungsgasstromes, der durch die Zweistoffdüse eintritt, liegt zwischen 0 °C und 100 °C, vorzugsweise zwischen 10 °C und 90 °C.

Zur Erzeugung des Wirbelbettes können alle üblicherweise für derartige Zwecke eingesetzten Gase verwendet werden. Vorzugsweise in Betracht kommen Luft oder Stickstoff.

Zum Einsprühen der flüssigen Phase über eine oder mehrere Zweistoffdüsen können ebenfalls alle für derartige Zwecke üblichen Gase verwendet werden. Vorzugsweise in Frage kommen Luft oder Stickstoff.

Das fertige Granulat kann über übliche Entnahme-Vorrichtungen aus dem Granulator ausgeschleust werden. Vorzugsweise verwendet man Gegenstrom-Schwerkraft-Sichter.

Das erhaltene Produkt kann anschließend noch nachgranuliert und/oder getrocknet und/oder gemahlen werden.

Das erfindungsgemäße Verfahren kann nach der Variante (a) kontinuierlich oder diskontinuierlich durchgeführt werden.

Bei der Vorrichtung zur Herstellung der erfindungsgemäßen Granulate nach der Variante (a) handelt es sich um einen Wirbelschichtgranulator, der sich von den bisher bekannten Apparaten dieses Typs im wesentlichen dadurch unterscheidet, daß die flüssige Phase und die feinpulvrige feste Phase getrennt voneinander in das Wirbelbett eingespeist werden.

Dabei befinden sich eine oder mehrere Zuleitungen für die feste Phase im unteren Bereich des Wirbelbettes, vorzugsweise in der Seitenwand der Apparatur etwas oberhalb des Anströmbodens. Zur Zufuhr der flüssigen Phase sind eine oder mehrere Zweistoff-Düsen enthalten, die sich vorzugsweise im Anströmboden befinden. Die Zweistoff-Düsen sind so konstruiert, daß durch eine erste Zuleitung die flüssige Phase transportiert und durch eine zweite Zuleitung ein Gasstrom (Zerstäubungsgas) eingespeist wird. Unterhalb des Anströmbodens sind eine oder mehrere Zuleitungen zum Einbringen von Fluidisierungsgas angebracht. Schließlich enthält die Vorrichtung einen oder mehrere Gegenstrom-Schwerkraft-Sichter zum Austragen von Granulat. Die Gegenstrom-Schwerkraft-Sichter sind vorzugsweise in den Anströmboden eingebaut. Als Gegenstrom-Schwerkraft- Sichter kommen vorzugsweise sogenannte Zick-Zack-Sichter in Frage.

Zur Durchführung des erfindungsgemäßen Verfahrens nach der Variante (a) arbeitet man vorzugsweise in einem Wirbelschichtgranulator, wie er in Abbildung 1 schematisch dargestellt ist. In dieser Abbildung bedeuten

1 die Wand des Granulatorgefäßes,
2 die Zufuhr für die feste Phase,
3 die Zufuhr für die flüssige Phase,
4 die Zufuhr für das Zerstäubungsgas,
5 die Zweistoffdüse,
6 die Zufuhr für das Fluidisierungsgas,
7 das Wirbelbett,
8 die Beruhigungszone im Wirbelbett,

9 den Gegenstrom-Schwerkraft-Sichter und

10 die Entnahme-Vorrichtung für das Granulat.

Zur Durchführung des erfindungsgemäßen Verfahrens nach der Variante (b) stellt man zunächst eine feste Mischung her, indem man mindestens ein Dispergiermittel sowie gegebenenfalls einen oder mehrere agrochemische Wirkstoffe und/oder Zusatzstoffe mit mindestens einem festen Trägerstoff in einem solchen Verhältnis vermengt, daß die resultierende Mischung in fester Phase vorliegt. Diese Feststoff-Mischung wird nach üblichen Verfahren homogenisiert und gemahlen.

Ferner stellt man eine Lösung aus mindestens einem agrochemischen Wirkstoff sowie gegebenenfalls Zusatzstoffen in mindestens einem Additiv her. Dazu werden die Komponenten bei Temperaturen zwischen 10 °C und 100 °C, vorzugsweise zwischen 20 °C und 90 °C miteinander verrührt, so daß eine flüssige Phase entsteht. Bei der flüsigen Phase handelt es sich demgemäß um eine Schmelze oder eine echte Lösung.

Zur Durchführung des erfindungsgemäßen Verfahrens nach der Variante (b) wird die feste, feinpulvrige Phase in einen Mischer gegeben und mit der flüssigen Phase besprüht. Im allgemeinen geht man dabei so vor, daß man die flüssige Phase durch eine oder mehrere separate Düsen in den Mischer einsprüht. Vorzugsweise erfolgt die Zugabe der flüssigen Phase über eine oder mehrere Zweistoff-Düsen, die so konstruiert sind, daß durch eine erste Zuleitung die flüssige Phase transportiert und durch eine zweite Zuleitung ein Gasstrom (Zerstäubungsgas) eingespeist wird. Beide Ströme treffen am Düsenende so aufeinander, daß die flüssige Phase mit Hilfe des Zerstäubungsgases in Form von kleinen Tröpfchen in den Mischer gesprüht wird und dort auf die Partikel der festen Phase trifft.

Gegebenenfalls kann auch durch Aufsprühen von Wasser eine Nachbehandlung vorgenommen werden. Zur Entfernung von Wasser und/oder anderen Lösungsmitteln kann die entstehende Feststoff-Formulierung nach üblichen Methoden getrocknet werden.

Auch bei der Durchführung des erfindungsgemäßen Verfahrens nach der Variante (b) können die Temperaturen innerhalb eines größeren Bereiches variiert werden. So arbeitet man mit einer flüssigen Phase, deren Temperatur zwischen 10 °C und 100 °C, vorzugsweise zwischen 20 ° und 90 °C liegt. Die feste Phase wird auf Temperaturen zwischen 10 °C und 50 °C, vorzugsweise zwischen 20 °C und 40 °C gehalten. Die Temperatur des Zerstäubungsgasstromes, der durch die Zweistoff-Düse eintritt, liegt zwischen 0 °C und 100 °C, vorzugsweise zwischen 10 °C und 90 °C.

Zum Einsprühen der flüssigen Phase in den Mischer über eine oder mehrere Düsen können wiederum alle für derartige Zwecke üblichen Gase verwendet werden. Vorzugsweise in Frage kommen Luft oder Stickstoff.

Zur Durchführung des erfindungsgemäßen Verfahrens nach der Variante (b) kommen alle für derartige Zwecke üblichen Mischer in Betracht. Die entstehende Feststoff-Formulierung kann über übliche Entnahme-Vorrichtungen aus dem Mischer ausgetragen werden. Das erhaltene pulvrige oder körnige Produkt kann anschließend einer üblichen Mahlung oder Granulation unterworfen werden.

Das erfindungsgemäße Verfahren kann auch beim Arbeiten nach der Variante (b) kontinuierlich oder diskontinuierlich durchgeführt werden. Im allgemeinen arbeitet man diskontinuierlich, indem man den Mischer chargenweise beschickt.

Bei der Durchführung des erfindungsgemäßen Verfahrens nach der Variante (a) erhält man einheitlich geformte Granulate, während beim Arbeiten nach der Variante (b) pulverförmige oder körnige Produkte anfallen. Diese Produkte können durch Mahlen mit Hilfe von dazu üblichen Vorrichtungen zerkleinert werden.

Die erfindungsgemäßen Feststoff-Formulierungen besitzen eine hohe Festigkeit. Sie weisen eine kompakte, mikroporöse Struktur auf und sind trotzdem in Wasser oder anderen Lösungsmitteln spontan dispergierbar bzw. löslich. Unter spontaner Dispergierbarkeit bzw. Löslichkeit ist im vorliegenden Fall zu verstehen, daß sich die Teilchen im allgemeinen in 0,1 bis 5 Minuten, vorzugsweise in 0,2 bis 3 Minuten, vollständig dispergieren bzw. lösen.

Die erfindungsgemäßen Feststoff-Formulierungen enthalten einen oder mehrere agrochemische Wirkstoffe und lassen sich deshalb nach üblichen Methoden zur Pflanzenbehandlung in der Landwirtschaft und im Gartenbau einsetzen. Beispielsweise werden die erfindungsgemäßen Feststoff-Formulierungen in Wasser dispergiert. Die dabei entstehenden Dispersionen lassen sich gegebenenfalls nach vorherigem Verdünnen nach üblichen Methoden auf die Pflanzen und/oder deren Lebensraum ausbringen, also z.B. durch Spritzen, Sprühen oder Gießen. Die Aufwandmengen richten sich dabei nach der Konzentration der Dispersion, nach der jeweiligen Indikation und nach den enthaltenen aktiven Komponenten.

Die Herstellung und die Verwendung der erfindungsgemäßen Feststoff-Formulierungen werden durch die folgenden Beispiele veranschaulicht.

Herstellungsbeispiele

Beispiel 1

Zur Herstellung einer flüssigen Phase werden 930 g 1-(4-Chlorphenyl)-4,4-dimethyl-3-(1,2,4-triazol-1-yl-methyl)-pentan-3-ol (97 %ig) in 2700 g Polyethoxyisotridecylalkohol mit durchschnittlich 6 Ethylenoxid-Einheiten pro Molekül bei 60 °C unter Rühren vollständig gelöst.

Außerdem wird eine feinpulverige, feste Phase hergestellt, indem man 1200 g eines mit Formaldehyd vernetzten Alkylarylsulfonates mit 1170 g hochdisperser Kieselsäure in einem kleinen Pflugscharmischer bei Raumtemperatur vermengt und homogenisiert.

Die anschließende Granulatherstellung erfolgt in einem Wirbelschichtgranulator. Dazu wird die feste Phase in den Granulator eingebracht und durch Einblasen von 25 °C warmer Luft in einer Menge von 300 bis 500 $m^3$/h fluidisiert. Gleichzeitig wird damit begonnen, die 60 °C warme flüssige Phase über eine Zweistoffdüse mit Hilfe von Luft in das Wirbelbett einzusprühen. Das Einsprühen der flüssigen Phase ist nach 60 Minuten beendet. Danach wird durch Aufsprühen von 1600 g Wasser bei 50 °C nachgranuliert und unter Erwärmung der eingeleiteten Luft auf 70 °C bis zu einer Restfeuchte von 1 Gew.-% Wasser getrocknet. Das entstandene Granulat wird klassiert. Man erhält auf diese Weise 5 kg Granulat mit Korngrößen im Bereich zwischen 200 und 1.500 µm.

Bei Zugabe von 1 kg dieses Granulates, welches 1,5 Gew.-% Wirkstoff enthält, zu 200 l Wasser erfolgt eine spontane Benetzung und eine vollständige Auflösung innerhalb von 10 Sekunden.

Beispiel 2

Zur Herstellung einer flüssigen Phase werden 1550 g 1-(4-Chlorphenyl)-4,4-dimethyl-3-(1,2,4-triazol-1-yl-methyl)-pentan-3-ol (97 %ig) in einem Gemisch aus 900 g Polyethoxy-iso-tridecylalkohol mit durchschnittlich 6 Ethylenoxid-Einheiten pro Molekül und 1200 g Alkylarylpolyethoxy-ethanol-phosphorsäureester, der unter der Bezeichnung "Blendex®" im Handel ist, bei 60 °C unter Rühren vollständig gelöst.

Außerdem wird eine feinpulverige, feste Phase hergestellt, indem man 1200 g eines mit Formaldehyd vernetzten Alkylarylsulfonates mit 1150 g hochdisperser Kieselsäure in einem kleinen Pflugscharmischer bei Raumtemperatur vermengt und homogenisiert.

Die anschließende Granulatherstellung erfolgt in einem Wirbelschichtgranulator. Dazu wird die feste Phase in den Granulator eingebracht und durch Einblasen von 25 °C warmer Luft in einer Menge von 300 bis 500 $m^3$/h fluidisiert. Gleichzeitig wird damit begonnen, die 60 °C warme flüssige Phase über eine Zweistoffdüse mit Hilfe von Luft in das Wirbelbett einzusprühen. Das Einsprühen der flüssigen Phase ist nach 60 Minuten beendet. Danach wird durch Aufsprühen von 1600 g Wasser bei 50 °C nachgranuliert und unter Erwärmung der eingeleiteten Luft auf 70 °C bis zu einer Restfeuchte von 1 Gew,-% Wasser getrocknet. Das entstandene Granulat wird klassiert. Man erhält auf diese Weise 5 kg Granulat mit Korngrößen im Bereich zwischen 200 und 1.500 µm.

Bei Zugabe von 1 kg dieses Granulates, welches 2,5 Gew.-% Wirkstoff enthält, zu 200 l Wasser erfolgt eine spontane Benetzung und eine vollständige Auflösung innerhalb von 10 Sekunden.

Beispiel 3

Zur Herstellung einer flüssigen Phase werden 4640 g 1-(4-Chlorphenyl)-4,4-dimethyl-3-(1,2,4-triazol-1-yl-methyl)-pentan-3-ol (97 %ig) in 13360 g Polyethoxy-isotridecylalkohol mit durchschnittlich 6 Ethylenoxid-Einheiten pro Molekül bei 60 °C unter Rühren vollständig gelöst.

Außerdem wird eine feinpulverige feste Phase hergestellt, indem man 6000 g eines mit Formaldehyd vernetzten Alkylarylsulfonates mit 6000 g hochdisperser Kieselsäure in einem kleinen Pflugscharmischer bei Raumtemperatur vermengt und homogenisiert.

Die anschließende Granulierung wird in einer Granulierapparatur des in Abbildung 1 dargestellten Typs durchgeführt. Dazu wird die feste Phase über die Zuleitungen 2 pneumatisch in den Wirbelschichtreaktor eingebracht und durch Einblasen von 80 °C warmem Stickstoff in einer Menge von 50 kg/h über die Zufuhr 6 fluidisiert. Gleichzeitig wird über die Zweistoffdüse 5 die 60 °C warme flüssige Phase mit Hilfe von Stickstoff als Zerstäubungsgas eingesprüht. Die Produktströme sind so geregelt, daß die feste Phase in einer Menge von 1,2 kg/h und die flüssige Phase in einer Menge von 1,8 kg/h in den Reaktor eingespeist werden. Aus dem sich bildenden Fließbett 7 werden 3 kg/h an Granulat mit einer mittleren Korngröße von 0,4 mm kontinuierlich über den Gegenstrom-Schwerkraft-Sichter 9 und die Entnahme-Vorrichtung 10 ausgeschleust. Man erhält auf diese Weise 28 kg an Granulat mit einem Gehalt von 15,0 Gew.-% an 1-(4-Chlorphenyl)-4,4-dimethyl-3-(1,2,4-triazol-1-yl-methyl)-pentan-3-ol.

Beispiel 4

Zur Herstellung einer flüssigen Phase werden 130 g 6-Methyl-2-oxo-1,3-dithiolo-[4,5b]-chinoxalin in 2500 g Polyethoxy-iso-tridecylalkohol mit durchschnittlich 6 Ethylenoxid-Einheiten pro Molekül und 2500 g N-Octylpyrrolidon bei 60 °C unter Rühren vollständig gelöst.

Außerdem wird eine feinpulverige feste Phase hergestellt, indem man 1000 g Reisstärke und 1900 g eines mit Formaldehyd vernetzten Alkylarylsulfonates mit 1900 g hochdisperser Kieselsäure in einem kleinen Pflugscharmischer bei Raumtemperatur vermengt und homogenisiert.

Die anschließende Granulierung wird in einer Granulierapparatur des in Abbildung 1 dargestellten Typs durchgeführt. Dazu wird die feste Phase über die Zuleitungen 2 pneumatisch in den Wirbelschichtreaktor eingebracht und durch Einblasen von 80 °C warmem Stickstoff in einer Menge von 50 kg/h über die Zufuhr 6 fluidisiert. Gleichzeitig wird über die Zweistoffdüse 5 die 60 °C warme flüssige Phase mit Hilfe von Stickstoff als Zerstäubungsgas eingesprüht. Die Produktströme sind so geregelt, daß die feste Phase in einer Menge von 1,2 kg/h und die flüssige Phase in einer Menge von 1,8 kg/h in den Reaktor eingespeist werden. Aus dem sich bildenden Fließbett 7 werden 3 kg/h an Granulat mit einer mittleren Korngröße von 0,4 mm kontinuierlich über den Gegenstrom-Schwerkraft-Sichter 9 und die Entnahme-Vorrichtung 10 ausgeschleust. Man erhält auf diese Weise 9 kg an Granulat mit einem Gehalt von 1,3 Gew.-% an 6-Methyl-2-oxo-1,3-dithiolo-[4,5b]-chinoxalin.

Beispiel 5

Zur Herstellung einer flüssigen Phase werden 101,56 g 1-(4-Chlorphenyl)-4,4-dimethyl-3-(1,2,4-triazol-1-yl-methyl)-pentan-3-ol, 7,54 g 6-Methyl-2-oxo-1,3-dithiolo-[4,5b]-chinoxalin, 104,5 g eines Gemisches von Alkylcarbonsäure-dimethylamiden, das durchschnittlich zu 5 % aus Hexancarbonsäure-dimethylamid, 50 % Octancarbonsäure-dimethylamid, 40 % Decancarbonsäure-dimethylamid und 5 % Dodecancarbonsäure-dimethylamid besteht, 52,5 g Polyethoxy-iso-tridecylalkohol mit durchschnittlich 6 Ethylenoxid-Einheiten pro Molekül und 5 g p-Toluolsulfonsäure bei 80 °C unter Rühren vollständig gelöst.

Außerdem wird eine feinpulverige feste Phase hergestellt, indem man 156,5 g hochdisperse Kieselsäure, 52,5 g eines Diphenyl-sulfonsäure-Formaldehyd-Kondensates und 19,9 g Natrium-dialkylnaphthyl-sulfonat in einem Pflugscharmischer bei Raumtemperatur vermengt und homogenisiert.

Die anschließende Herstellung der Feststoff-Formulierung erfolgt in der Weise, daß man die flüssige Phase bei 80 °C unter Rühren über eine Düse in den Mischer auf die feste Phase, die bei Raumtemperatur vorliegt, aufsprüht. Man erhält dadurch 500 g einer körnigen Feststoff-Formulierung, die zu einem Pulver vermahlen wird.

Beispiel 6

Zur Herstellung einer flüssigen Phase werden 136,64 g 3-Methyl-4-amino-6-phenyl-1,2,4-triazin-5(4H)-on und 30,0 g Polyethoxy-iso-tridecylalkohol mit durchschnittlich 6 Ethylenoxid-Einheiten pro Molekül bei 80 °C unter Rühren vollständig gelöst.

Außerdem wird eine feinpulverige feste Phase hergestellt, indem man 18,32 g 2-Ethoxy-2,3-dihydro-3,3-dimethyl-5-benzofuranyl-methan-sulfonat, 18,60 g 3-Methoxycarbonyl-aminophenyl-N-(3'-methyl-phenyl)-carbamat, 60,0 g Diphenyl-sulfonsäure-Formaldehyd-kondensat, 30,0 g hochdisperse Kieselsäure und 6,44 g Kaolin in einem Pflugscharmischer bei Raumtemperatur vermengt und homogenisiert.

Die anschließende Herstellung der Feststoff-Formulierung erfolgt in der Weise, daß man die flüssige Phase bei 80 °C unter Rühren über eine Düse in den Mischer auf die feste Phase, die bei Raumtemperatur vorliegt, aufsprüht. Man erhält dadurch 300 g einer körnigen Feststoff-Formulierung, die zu einem Pulver vermahlen wird.

Beispiel 7

Zur Herstellung einer flüssigen Phase werden 53,2 kg 1-(4-Chlorphenoxy)-3,3-dimethyl-(1,2,4-triazol-1-yl)-butan-2-on, 20 kg Polyethoxy-iso-tridecylalkohol mit durchschnittlich 6 Ethylenoxid-Einheiten pro Molekül, 20 kg N-Octyl-pyrrolidon und 20 kg eines Gemisches von Alkylcarbonsäure-dimethylamiden, das durchschnittlich zu 5 % aus Hexancarbonsäure-dimethylamid, 50 % Octancarbonsäure-dimethylamid, 40 % Decancarbonsäure-dimethylamid und 5 % Dodecancarbonsäure-dimethylamid besteht, bei 90 °C unter Rühren vollständig gelöst.

Außerdem wurd eine feinpulverige feste Phase hergestellt, indem man 4 kg Netzmittel auf Basis von

Alkylarylsulfonat, 20 kg eines Diphenyl-sulfonsäure-Formaldehyd-Kondensates und 62,8 kg hochdisperse Kieselsäure in einem Pflugscharmischer bei Raumtemperatur vermengt und homogenisiert.

Die anschließende Herstellung der Feststoff-Formulierung erfolgt in der Weise, daß man die flüssige Phase bei 90 °C unter Rühren über eine Düse in den Mischer auf die feste Phase, die bei Raumtemperatur vorliegt, aufsprüht. Man erhält dadurch 200 kg einer körnigen Feststoff-Formulierung, die zu einem Pulver vermahlen wird.

Beispiel 8

Zur Herstellung einer flüssigen Phase werden 26,3 kg 1-(4-Chlorphenoxy)-3,3-dimethyl-(1,2,4-triazol-1-yl)-butan-2-ol, 10 kg Polyethoxy-iso-tridecylalkohol mit durchschnittlich 6 Ethylenoxid-Einheiten pro Molekül, 10 kg N-Octyl-pyrrolidon und 10 kg eines Gemisches von Alkylcarbonsäure-dimethylamiden, das durchschnittlich zu 5 % aus Hexancarbonsäure-dimethylamid, 50 % Octancarbonsäure-dimethylamid, 40 % Decancarbonsäure-dimethylamid und 5 % Dodecancarbonsäure-dimethylamid besteht, bei 90 °C unter Rühren vollständig gelöst.

Außerdem wird eine feinpulverige feste Phase hergestellt, indem man 2 kg Netzmittel auf Basis von Alkylarylsulfonat, 10 kg eines Diphenyl-sulfonsäure-Formaldehyd-Kondensates und 31,7 kg hochdisperse Kieselsäure in einem Pflugscharmischer bei Raumtemperatur vermengt und homogenisiert.

Die anschließende Herstellung der Feststoff-Formulierung erfolgt in der Weise, daß man die flüssige Phase bei 90 °C unter Rühren über eine Düse in den Mischer auf die feste Phase, die bei Raumtemperatur vorliegt, aufsprüht. Man erhält dadurch 100 kg einer körnigen Feststoff-Formulierung, die zu einem Pulver vermahlen wird.

Beispiel 9

Zur Herstellung einer flüssigen Phase werden 25,5 kg 1-(4-Chlorphenyl)-4,4-dimethyl-3-(1,2,4-triazol-1-yl-methyl)-pentan-3-ol, 10 kg Polyethoxy-iso-tridecylalkohol mit durchschnittlich 6 Ethylenoxid-Einheiten pro Molekül, 10 kg N-Octyl-pyrrolidon und 10 kg eines Gemisches von Alkylcarbonsäure-dimethylamiden, das durchschnittlich zu 5 % aus Hexancarbonsäure-dimethylamid, 50 % Octancarbonsäure-dimethylamid, 40 % Decancarbonsäure-dimethylamid und 5 % Dodecancarbonsäure-dimethylamid besteht, bei 90 °C unter Rühren vollständig gelöst.

Außerdem wird eine feinpulverige feste Phase hergestellt, indem man 2 kg Netzmittel auf Basis von Alkylarylsulfonat, 10 kg eines Diphenyl-sulfonsäure-Formaldehyd-Kondensates und 32,5 kg hochdisperse Kieselsäure in einem Pflugscharmischer bei Raumtemperatur vermengt und homogenisiert.

Die anschließende Herstellung der Feststoff-Formulierung erfolgt in der Weise, daß man die flüssige Phase bei 90 °C unter Rühren über eine Düse in den Mischer auf die feste Phase, die bei Raumtemperatur vorliegt, aufsprüht. Man erhält dadurch 100 kg einer körnigen Feststoff-Formulierung, die zu einem Pulver vermahlen wird.

Beispiel 10

Zur Herstellung einer flüssigen Phase werden 10 g 1-[4-(2-Chlor-1,1,2-trifluorethoxy)-phenyl]-3-(4-phenyl-1,2,5-oxadiazol-3-yl)-harnstoff, 30 g eines Emulgators auf Basis von Alkylarylpolyglykolether, 6 g eines Ethylenoxid-dimethylsiloxan-Block-Copolymers mit Si-C-Bindung, 6 g Kokosfettsäure-2-sulfethylester Natriumsalz mit 10 % freier Kokosfettsäure bei 90 °C unter Rühren vollständig gelöst.

Außerdem wird eine feinpulverige feste Phase hergestellt, indem man 12 g Diphenyl-sulfonsäure-Formaldehy-Kondensat und 36 g hochdisperse Kieselsäure in einem Mischer bei Raumtemperatur vermengt und homogenisiert.

Die anschließende Herstellung der Feststoff-Formulierung erfolgt in der Weise, daß man die flüssige Phase bei 90 °C unter Rühren über eine Düse in den Mischer auf die feste Phase, die bei Raumtemperatur vorliegt, aufsprüht. Man erhält dadurch 100 g einer körnigen Feststoff-Formulierung, die zu einem Pulver vermahlen wird.

Vergleichsbeispiel A

Ein Gemisch aus 2630 g 1-(4-Chlorphenyl)-4,4-dimethyl-3-(1,2,4-triazol-1-yl-methyl)-pentan-3-ol, 2.000 g eines mit Formaldehyd vernetzten Alkylarylsulfonates, 300 g Phospholipid und 5070 g Natriumhydrogencarbonat wird in einem Pflugscharmischer auf eine Teilchengröße von etwa 1 mm zerkleinert und homogenisiert. Danach wird das Gemisch mit Hilfe einer Luftstrahlmühle bis zu einer mittleren Teilchengröße von etwa 7 µm gemahlen und nochmals nachgemischt.

Die so erhaltene Vormischung wird in einem handelsüblichen Wirbelschichtgranulator zu einem Granulat verarbeitet, indem man jeweils 4,8 kg Pulver in der Wirbelschicht innerhalb von 21 Minuten bei Raumtemperatur mit 1,5 Litern Wasser befeuchtet und anschließend durch Erwärmung der Zuluft auf 70 °C innerhalb von 11 Minuten trocknet, so daß der Restwasser-Gehalt im Granulat etwa 1 Gew.-% beträgt. Die Temperatur des Granulates bleibt bei diesem Vorgang unterhalb von 40 °C. Das resultierende Granulat wird durch Verwendung einer Schwingsiebkaskade klassiert. Man erhält auf diese Weise pro Ansatz 4,5 kg an Granulat mit Korngrößen im Bereich zwischen 200 und 1.500 µm.

Die nach der CIPAC-Methode MT 168 gemessene Suspensionsstabilität des Granulates beträgt 84 %. Der nach der CIPAC-Methoder MT 167 durchgeführte Naßsiebtest ergibt auf den Sieben mit der Maschengröße 315, 250 bzw. 160 µm Siebrückstände von unter 0,005 %.

Vergleichsbeispiel B

Ein Gemisch aus 2630 g 1-(4-Chlorphenyl)-4,4-dimethyl-3-(1,2,4-triazol-1-yl-methyl)-pentan-3-ol, 2.000 g eines mit Formaldehyd vernetzten Alkylarylsulfonates, 300 g Phospholipid und 5070 g Natriumhydrogencarbonat wird mit Hilfe eines Zahnscheibenrührers in 10 kg Wasser eingerührt und mit einer Zahnkolloid-Mühle vorzerkleinert. Danach erfolgt eine Feinmahlung mit einer Perlmühle, deren Durchsatz 25 kg/h beträgt. Man erhält eine wäßrige Suspension mit einem Feststoffgehalt von 50 Gew.-%. Die Viskosität der Suspension beträgt etwa 65 mPas bei einem Schergefälle von 1.000/sec; der mittlere Teilchendurchmesser liegt bei etwa 4 µm.

Die so hergestellte Suspension wird in einer Menge von 7 kg/h in einen Wirbelschichtreaktor mit kontinuierlichsichtendem Produktaustrag eingedüst. Zur Fluidisierung dient ein Stickstoffstrom in einer Menge von 92 kg/h. Die Temperatur des Stickstoffstromes beträgt 90 °C. In dem sich bildenden Fließbett stellt sich eine Produkttemperatur von unterhalb 40 °C ein. Das ausgetragene Granulat hat eine Korngröße von etwa 0,4 mm. Das Granulat enthält eine Restfeuchte von 2,1 Gew.-% Wasser.

Die nach der CIPAC-Methode MT 168 gemessene Suspensionsstabilität des Granulates beträgt 98 %. Der nach der CIPAC-Methode MT 167 durchgeführte Naßsiebtest ergibt auf den Sieben mit der Maschengröße 315, 250 bzw. 160 µm keine Siebrückstände.

In den nachfolgenden Verwendungsbeispielen wurden die hergestellten Granulate bezüglich ihrer biologischen Wirksamkeit getestet.

Verwendungsbeispiel A

Erysiphe-Test (Gerste) / kurativ

Zur Herstellung einer zweckmäßigen Wirkstoffzubereitung vermischt man 1 Gew.-Teil des jeweiligen Granulates mit Wasser und verdünnt das entstehende Konzentrat mit Wasser auf die gewünschte Konzentration.

Zur Prüfung auf kurative Wirksamkeit werden junge Pflanzen mit Sporen von Erysiphe graminis f.sp. hordei bestäubt. 48 Stunden nach der Inokulation werden die Pflanzen mit der Wirkstoffzubereitung taufeucht besprüht.

Die Pflanzen werden in einem Gewächshaus bei einer Temperatur von ca. 20 °C und einer relativen Luftfeuchtigkeit von ca. 80 % aufgestellt, um die Entwicklung von Mehltaupusteln zu begünstigen.

Die Auswertung erfolgt 7 bzw. 14 Tage nach der Inokulation.

Wirkstoff-Formulierungen, Wirkstoffkonzentrationen und Versuchsergebnisse gehen aus der folgenden Tabelle hervor.

Tabelle A

Erysiphe-Test (Gerste) / kurativ

| Granulat gemäß Beispiel | Wirkstoffkonzentration in der Spritzbrühe in mg/l | Wirkungsgrad in % der unbehandelten Kontrolle 7d | 14d |
|---|---|---|---|
| Bekannt: | | | |
| (A) | 150 | 0 | 0 |
| (B) | 150 | 0 | 0 |
| Erfindungsgemäß: | | | |
| (1) | 150 | 80 | 75 |
| (2) | 150 | 49 | 15 |
| (3) | 150 | 88 | 60 |

**Patentansprüche**

1. Feststoff-Formulierungen bestehend aus
   A) mindestens einem agrochemischen Wirkstoff,
   B) mindestens einem Additiv aus den Gruppen
   - Polyethoxy-iso-tridecylalkohol mit durchschnittlich 6 Ethylenoxid-Einheiten pro Molekül, oder
   - Alkylaryl-polyethoxyethanol-phosphorsäureester, oder
   - der N-Alkyl-lactame der Formel

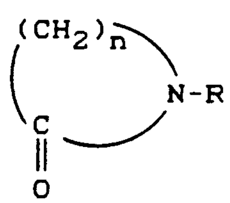

(II)

in welcher
R für Alkyl mit 6 bis 18 Kohlenstoffatomen steht und
n für die Zahlen 3, 4 oder 5 steht,

- der Alkylcarbonsäure-dimethylamide der Formel

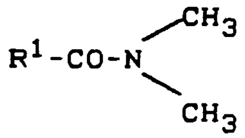

(III)

in welcher

$R^1$ für Alkyl mit 5 bis 11 Kohlenstoffatomen steht,

C) mindestens einem Dispergiermittel,

D) mindestens einem Trägerstoff sowie

E) gegebenenfalls weiteren Wirkstoffen und/oder Zusatzstoffen.

**2.** Verfahren zur Herstellung von Feststoff-Formulierungen gemäß Anspruch 1, dadurch gekennzeichnet, daß man

a)

- eine Lösung aus mindestens einem agrochemischen Wirkstoff sowie gegebenenfalls Zusatzstoffen in mindestens einem Additiv aus den unter (B) genannten Gruppen und
- eine Mischung aus mindestens einem Dispergiermittel und mindestens einem Trägerstoff sowie gegebenenfalls weiteren agrochemischen Wirkstoffen und/oder Zusatzstoffen

getrennt in einen Wirbelschichtgranulator einbringt, bis zum Entstehen eines körnigen Produktes granuliert und nach gegebenenfalls vorherigem Besprühen mit Wasser sowie anschließendem Trocknen das Granulat aus dem Wirbelschichtgranulator ausschleust, oder

b)

- eine Mischung aus mindestens einem Dispergiermittel und mindestens einem Trägerstoff sowie gegebenenfalls agrochemischen Wirkstoffen und/oder Zusatzstoffen in einem Mischer vorlegt,
- eine Lösung aus mindestens einem agrochemischen Wirkstoff sowie gegebenenfalls Zusatzstoffen in mindestens einem Additiv aus den unter (B) genannten Gruppen bis zum Entstehen eines Produktes der gewünschten Korngröße einsprüht und
- die anfallende Feststoff-Formulierung nach gegebenenfalls vorherigem Besprühen mit Wasser sowie anschließendem Trocknen aus dem Mischer austrägt,

und gegebenenfalls anschließend die entstandenen Feststoff-Formulierungen mahlt.

**3.** Verwendung von Feststoff-Formulierungen gemäß Anspruch 1 als Pflanzenbehandlungsmittel.

**4.** Vorrichtung zur Herstellung von Granulaten, dadurch gekennzeichnet, daß die Vorrichtung aus einem Wirbelschichtgranulator besteht,

- der eine oder mehrere Zuleitungen zum Einbringen einer festen Phase in das Wirbelbett,
- eine oder mehrere Zweistoffdüsen zum Einbringen und zum Zerstäuben einer flüssigen Phase,
- eine oder mehrere Zuleitungen zum Einbringen von Fluidisierungsgas und
- einen oder mehrere Gegenstromschwerkraft-Sichter zum Austragen von Granulat

enthält.

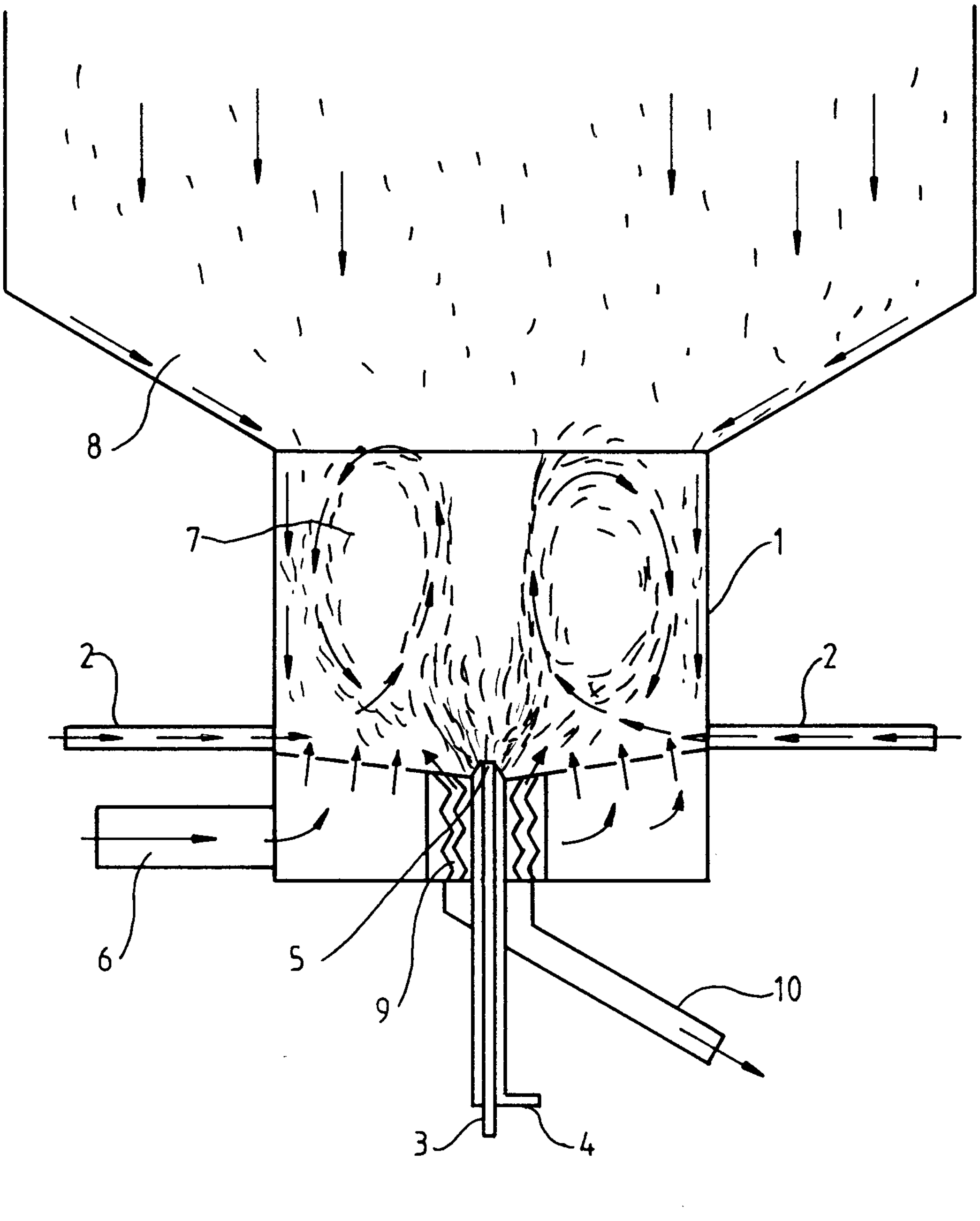


FIG.1